# EUROPÄISCHE PATENTSCHRIFT

(11) **EP 1 090 494 B1**
(45) Veröffentlichungstag und Bekanntmachung des Hinweises auf die Patenterteilung: **19.06.2002**
(21) Anmeldenummer: 98925382.8
(22) Anmeldetag: 23.06.1998
(51) Int. Cl.: H04M 3/50, H04Q 7/22

(54) **VERFAHREN ZUM ANBIETEN, BESTELLEN UND VERKAUFEN VON GÜTERN UND DIENSTLEISTUNGEN**
METHOD FOR OFFERING, ORDERING AND SELLING GOODS AND SERVICES
PROCEDE PERMETTANT DE PROPOSER, DE COMMANDER ET DE VENDRE DES BIENS ET DES SERVICES

(43) Veröffentlichungstag der Anmeldung: 11.04.2001
(73) Patentinhaber: Swisscom Mobile AG, 3050 Bern (CH)
(72) Erfinder: RITTER, Rudolf, CH-3052 Zollikofen (CH)
(74) Vertreter: BOVARD AG - Patentanwälte
(86) Internationale Anmeldenummer: CH9800276
(87) Internationale Veröffentlichungsnummer: WO9967938

(56) Entgegenhaltungen:
- WO-A-90/11661
- WO-A-96/25006
- WO-A-96/34471
- US-A- 5 283 731
- US-A- 5 345 501

## Beschreibung

Die vorliegende Erfindung betrifft eine Verfahren zum Anbieten, Bestellen und Verkaufen von Gütern und Dienstleistungen. Insbesondere betrifft die vorliegende Erfindung ein Verfahren zum Anbieten, Bestellen und Verkaufen von Gütern und Dienstleistungen, in welchem die genannten Güter und Dienstleistungen von mindestens einem Anbieter einer Vielzahl von Teilnehmern eines Mobilfunknetzes mittels einer Angebotsidentifizierung angeboten werden, welche von interessierten Teilnehmern in ihre Mobilgeräte eingegeben und mittels Kurzmeldungen über das Mobilfunknetz an eine Dienstzentrale übermittelt werden.

In der Patentschrift US 5 345 501 wird ein auf einer Haustelefonvermittlungszentrale basierendes System für die Verarbeitung und Weiterleitung von Bestellungen von Kunden an Lieferanten beschrieben, welches zusätzlich zur Zentrale noch eine Spracherkennungseinheit umfasst. Ein Kunde wird mittels Sprachanweisungen gebeten seine PIN (Personal Identification Number) Nummer mittels den Wähltasten seines Telefons einzugeben. Nach erfolgreicher Eingabe und Verifizierung der PIN Nummer wird in mehreren Schritten (Kategorien, Subkategorien) mittels Wähltasten oder Sprache ein Produkt, zum Beispiel eine Video Kassette mit einem bestimmten Filmtitel, vom Kunden gewählt und diesem mittels abgespeicherten Antworten bestätigt. Die Bezahlung des gewünschten Produkts erfolgt mittels Kreditkarte, deren Nummer vom Kunden eingegeben werden muss, oder durch Verrechnung durch den Telefonbetreiber. Solche und ähnliche Systeme sind für die verschiedensten Anwendungen bekannt; deren Benützung wird von den Kunden oft als umständlich und langwierig betrachtet.

In der Patentanmeldung WO 90/11661 wird ein mit dem öffentlich vermittelten Telefonnetz (Public Switched Telephone Network, PSTN) verbundenes Katalogbestellsystem beschrieben, in welchem ein Kunde die Nummer eines Bestelldienstes wählt und mittels gesprochenen Instruktionen angewiesen wird eine oder mehrere Bestellnummern einzugeben, wobei eingegebene Bestellungen dem Kunden wiederholt und von diesem bestätigt werden können. Anschliessend werden die eingegebenen Bestellnummern zusammen mit der Telefonnummer des Kunden auf Anfrage eines Lieferanten diesem über die Telefonleitung übermittelt. Zur erhöhten Sicherheit kann zusätzlich vom Kunden die Eingabe einer Kontonummer verlangt werden. Dieses System funktioniert ähnlich wie dasjenige in der oben beschriebenen Patentschrift und bietet keine automatisierte Abwicklung der Bezahlung.

In der Patentschrift US 4 797 913 wird ein Bestellsystem beschrieben, in welchem Produkte direkt durch Wählen einer Telefonnummer bestellt werden können. Das in US 4 797 913 beschriebene Bestellsystem basiert auf einem LATA (Local Access Transport Area) Vermittlungsnetz, in welchem Feature Group D Dienste verfügbar sind, welche mittels den ersten zwei Ziffern "10" der genannten Telefonnummer angewählt werden. Innerhalb dieser Feature Group D Dienste kann mit den nachfolgenden drei Stellen eine Zwischenvermittlungsstelle oder insbesondere ein Bestelldienstzentrum angewählt werden, wobei immer noch zehn Stellen zur Identifizierung eines Lieferanten und dessen Produkte zur Verfügung stehen. Das so beschriebene Bestellsystem eignet sich insbesondere für Katalogversanddienste, es bleibt allerdings offen wie beispielsweise Mengenangaben übermittelt werden oder wie die Identität des Klienten festgestellt wird, da nur die Telefonnummer des für die Bestellung benutzten Telefons bekannt ist.

Allen oben beschriebenen Bestellverfahren oder -systemen ist gemeinsam, dass sie es nicht ermöglichen bestellte Produkte, insbesondere bestellte Informationen, dem interessierten Kunden automatisch und direkt zu übermitteln. Zudem erlauben diese beschriebenen Systeme auch keine automatisierte Identifizierung des Kunden sondern basieren auf dessen Telefonnummer und in einigen Fällen zusätzlich auf Nummern, die vom Kunden eingegeben werden müssen. Zudem werden die Adressinformationen der Kunden nicht von diesen Systemen geliefert sondern deren Verwaltung muss von den Lieferanten übernommen werden.

In der Patentanmeldung WO 96/25006 wird ein interaktives Broadcast-System beschrieben, in welchem Kunden zur Bestellung von Gütern und Dienstleistungen mittels einem Meldungsgerät automatisch über Telefonleitungen eine Anrufzentrale anrufen können, die vom Kunden übermittelte Bestelldaten unter Zuhilfenahme einer Datenbank vervollständigt und zusammen mit einer Kundenidentifizierung an betreffende Lieferanten weiterleitet, welche ihrerseits entsprechend den vervollständigten Bestelldaten Güter und Dienstleistungen an den durch die Kundenidentifizierung ausgewiesenen Kunden liefert.

In der Patentanmeldung PCT/CH96/00464 (WO 98/28900) wurde ein Verfahren und System zur Übermittlung von Aufträgen, insbesondere zur Übermittlung von Produktebestellungen, Informationsanforderungen oder Zahlungstransaktionen in einem Telekommunikationsnetz beschrieben, gemäss welchem die genannten Aufträge von einer Vielzahl von Teilnehmern in einem Telekommunikationsnetz, insbesondere aber nicht ausschliesslich ein Mobilfunknetz, mindestens einem Lieferanten übermittelt werden. Dabei werden Aufträge in Kurzmeldungen nicht bloss als Bitströme durch das Telekommunikationsnetz übermittelt, sondern die darin enthaltenen Daten werden mit Teilnehmeridentifikationsdaten aus der Teilnehmerdatenbank des Telekommunikationsnetzes verknüpft. Das Verfahren findet Anwendung in einem Telekommunikationsnetz, in welchem die Identität des anrufenden Teilnehmers bei jedem Anruf durch die Dienstzentrale dieses Netzes erkannt wird, zum Beispiel ein Mobilfunknetz basierend auf dem GSM-Standard. Der Teilnehmer braucht bloss eine Angebotsidentifizierung der zum Verkauf angebotenen Güter oder Dienstleistungen einzugeben, welche mindestens eine Identifizierung dieser Güter oder Dienstleistungen sowie eine Identifizierung des betreffenden Lieferanten umfasst. Von dieser genannten Angebotsidentifizierung abhängige Bestellungsdaten werden mittels Kurzmeldungen über das genannte Telekommunikationsnetz an eine Dienstzentrale übermittelt, welche den Teilnehmer erkennt und mindestens gewisse der in der genannten Kurzmeldung enthaltenen Daten mit Teilnehmeridentifikationsdaten verknüpft und die verknüpften Daten an den betreffenden Lieferanten übermittelt.

Es ist eine Aufgabe dieser Erfindung, neue Verfahren zum Anbieten, Bestellen und Verkaufen von Gütern und Dienstleistungen vorzuschlagen, welche insbesondere auch dazu geeignet sind Anbieter von Gütern und Dienstleistungen von einer jeweils beschränkten verfügbaren Anzahl zu unterstützen.

Gemäss der vorliegenden Erfindung wird dieses Ziel insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere wird dieses Ziel vorteilhafterweise dadurch erreicht, dass für mindestens gewisse der angebotenen Güter und Dienstleistungen eine Mengenangabe abgespeichert wird, die der beschränkten verfügbaren Anzahl des betreffenden angebotenen Guts oder der betreffenden angebotenen Dienstleistung entspricht, dass für eine eingegangene Bestellung für mindestens gewisse angebotene Güter und Dienstleistungen ein Token generiert wird, falls ein betreffendes Gut oder eine betreffende Dienstleistung verfügbar ist, wobei dieser Token dem betreffenden Anbieter und dem betreffenden Teilnehmer übermittelt wird, und wobei für jede eingegangene Bestellung, für welche ein Token generiert, respektive übermittelt wurde, die entsprechende Mengenangabe über die verfügbare Anzahl dekrementiert wird.

Vorteilhafterweise werden anzubietende Güter und/oder Dienstleistungen über verschiedene Kommunikationskanäle an die Teilnehmer angeboten, wobei mindestens gewisse Angebote eine Angebotsidentifizierung enthalten.

Vorzugsweise wird ein bestellender Teilnehmer bei jeder Bestellung erkannt und auf Grund seiner Identifizierung werden von ihm übermittelte Bestelldaten mit entsprechenden Teilnehmeridentifikationsdaten verknüpft.

Vorzugsweise wird das Anbieten eines bestimmten angebotenen Guts oder einer bestimmten angebotenen Dienstleistung gestoppt, wenn die durch die betreffende Mengenangabe angegebene verfügbare Anzahl Null beträgt. In einer Variante kann das Angebot auch gestoppt werden, wenn das Angebot verfallen ist, das heisst wenn ein Verfalldatum eines angebotenen Guts oder einer Dienstleistung abgelaufen ist, wenn sie der Anbieter zurückzieht und/oder sich die Lieferbedingungen, beispielsweise der Preis oder die Verfügbarkeit der angebotenen Produkte, geändert haben.

Vorzugsweise werden mindestens gewisse der Token, welche dem Teilnehmer über ein Mobilfunknetz an sein Mobilgerät übermittelt werden, in einer entfernbar mit diesem Mobilgerät verbundenen Chipkarte abgespeichert, und mindestens gewisse der auf dieser Chipkarte gespeicherten Token können bei einer Zutrittskontrolle als Zutritts-Ticket oder als Link zu einem Satz von Zutritts-Tickets verwendet werden.

In einer Variante können interessierte Teilnehmer vorteilhafterweise zusätzlich eine Bestellungsanzahl eingeben, mit welcher sie mehr als ein Gut oder eine Dienstleistung bestellen können und welche zusammen mit den Bestellungsdaten übermittelt wird.

Falls genügend Güter oder Dienstleistungen verfügbar sind, werden bei solchen Mehrfachbestellungen je nach Variante entsprechend der bestellten Anzahl mehrere Token generiert und dem Anbieter, respektive dem Teilnehmer übermittelt, oder es wird ein Token generiert und übermittelt, welcher eine Lieferungszahl enthält, die der bestellten Anzahl entspricht. Falls nur eine ungenügende Anzahl der bestellten Güter oder Dienstleistungen verfügbar ist, werden wenigstens, je nach Variante, die entsprechende Anzahl Token oder ein Token mit der entsprechenden Lieferungszahl generiert und übermittelt. Die Mengenangabe der verfügbaren Güter und Dienstleistungen wird entsprechend um die gelieferte Anzahl dekrementiert.

In einer Variante wird vor der Generierung eines Tokens, respektive vor dessen Übermittlung, die Solvenz eines interessierten Teilnehmers geprüft.

Vorzugsweise wird einem interessierten Teilnehmer, beispielsweise über das Mobilfunknetz, ein negativer Bescheid übermittelt, falls für seine eingegangene Bestellung ein entsprechender Token nicht generiert, respektive übermittelt werden konnte, sei es weil er nicht solvent ist, weil nicht genügend Güter oder Dienstleistungen verfügbar sind, oder weil das Angebot verfallen oder zurückgezogen worden ist.

Je nach Variante werden einem Teilnehmer die Kosten eines von ihm bestellten Guts oder einer von ihm bestellten Dienstleistung, für welche ein Token generiert, respektive übermittelt wurde, in seiner Rechnung für die Kommunikationskosten, beispielsweise im Mobilfunknetz, in einer Rechnung von einem Finanzdienstleister, oder direkt einem elektronischen Konto in der mit seinem Mobilgerät entfembar verbundenen Chipkarte belastet.

In einer Variante können Anbieter Informationen über anzubietende Güter und Dienstleistungen einem automatisierten Angebot-Server übergeben.

Nachfolgend wird eine Ausführung der vorliegenden Erfindung anhand eines Beispieles beschrieben. Das Beispiel der Ausführung wird durch die folgenden beigelegten Figuren illustriert:

Figur 1 umfasst ein Blockdiagramm, welches schematisch den Datenfluss zwischen einem Anbieter von Gütern und/oder Dienstleistungen, einem Teilnehmer eines Mobilfunknetzes, einer Dienstzentrale dieses Mobilfunknetzes, einem Angebot-Server, einem Vermittlungsmodul, sowie einem Verkaufsmodul darstellt.

Figur 2 zeigt Flussdiagramme, welche den Programmablauf des programmierten Softwareprozesses zur Entgegennahme und Verarbeitung von Angeboten und Bestellungen in einem Verkaufsmodul schematisch und beispielhaft illustrieren.

Das Bezugszeichen 1 bezieht sich auf einen Anbieter von Gütern und/oder Dienstleistungen, die wir in der folgenden Beschreibung auch zusammenfassend als "Produkte" bezeichnen, wobei dieser Anbieter 1 insbesondere Produkte von jeweils beschränkter verfügbarer Anzahl anbieten möchte. Bei diesem Anbieter 1 kann es sich um Organisationen, beispielsweise kleine, mittlere oder grosse Unternehmen handeln, die Güter herstellen oder vertreiben oder die Dienstleistungen anbieten oder vermitteln, oder es kann sich um einzelne oder Gruppen von Privatpersonen handeln, die Produkte vermarkten möchten. Neben der beschränkten verfügbaren Anzahl dieser Produkte, die auch sehr klein sein und beispielsweise nur ein einziges oder ein paar wenige Produkte umfassen kann, können diese Produkte eine beschränkte Lebensdauer, das heisst ein Verfalldatum, aufweisen, zum Beispiel kann es sich um ein Zutrittsticket zu einer Sportveranstaltung oder einem Konzert handeln, welche nur an einem bestimmten Tag stattfinden, oder es kann sich um verderbliche Produkte, wie beispielsweise Lebensmittel handeln. Das Produkt kann auch Informationen beispielsweise Text, Audio, Video und/oder Multimedia Informationen umfassen, die vom Teilnehmer bestellt werden und ihm vom Anbieter 1 über einen geeigneten Übermittlungskanal, zum Beispiel als SMS-Kurzmeldungen oder USSD Daten über ein Mobilfunknetz, als E-Mail übers Internet, als DAB (Digital Audio Broadcasting) programmbegleitende Daten, etc. übermittelt werden.

Ein Anbieter 1 kann Angaben über anzubietende Produkte, zum Beispiel der Name oder die Bezeichnung des Produkts, eventuell eine kurze Beschreibung, eine Mengenangabe der verfügbaren Anzahl, Preisinformationen, sowie gegebenenfalls ein (zum Zeitpunkt des Angebotes noch gültiges) Verfalldatum einem dafür zuständigen Dienstleister 3 übermitteln. Dieser durch den Pfeil 2 angedeutete Datenfluss kann mittels Papier erfolgen, indem beispielsweise ein dafür vorgesehenes Formular ausgefüllt und dem Dienstleister 3 übergeben wird oder indem es mittels Fax dem Dienstleister 3 übermittelt wird. Der Datenfluss dieser Angebotsinformationen 2 kann aber auch auf elektronischem und automatisiertem Weg erfolgen, indem der Dienstleister 3 durch einen Angebot-Server 3 repräsentiert wird, welchem ein Anbieter 1 über ein Computer Terminal die beschriebenen Angebotsinformationen übergeben kann. Die entsprechenden Terminals können beispielsweise an einem öffentlich zugänglichen Ort installiert und über Festnetze oder Mobilnetze mit dem Angebot-Server 3 verbunden sein oder das Eingabeterminal kann eine Programmanwendung auf dem Internet sein, welche von einem Anbieter 1 über seinen PC benützt werden kann. Es gibt zahlreiche Möglichkeiten, die von einem Fachmann ausgeführt werden können. Zusätzlich zu den beschriebenen Angebotsinformationen müssen dem Dienstleister 3 auch Informationen über den Anbieter 1 übergeben werden, welche je nach Ausführungsvariante jedesmal erneut übermittelt werden müssen oder welche in einer Datenbank gespeichert werden, so dass eine eindeutige Identifizierung des Anbieters 1 zusätzlich zu den Angebotsinformationen genügt.

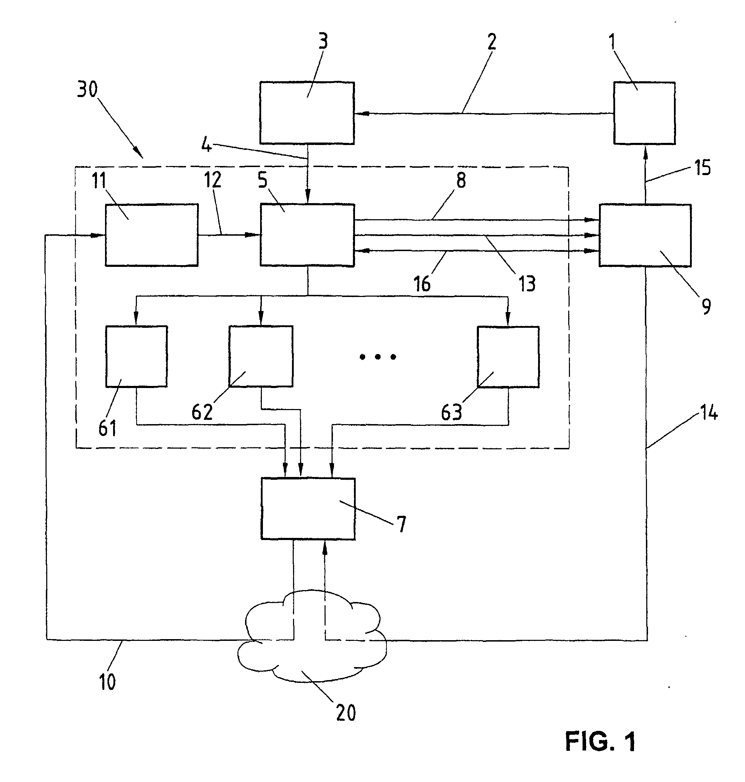

Im durch den Pfeil 4 angedeuteten Datenfluss in Figur 1 werden die vom Dienstleister 3, respektive Angebot-Server 3, erfassten Angebotsinformationen des Anbieters 1, zusammen mit dessen Identifizierung, dem Vermittlungsmodul 5 beispielsweise über ein Festnetz übermittelt. Falls auf Grund des eventuellen Verfalldatums bestimmt wird, dass das Produkt verfallen ist, wird dem Dienstleister 3, respektive dem Angebot-Server 3, eine Fehlermeldung übermittelt, die von diesem an den betreffenden Anbieter 1 weitergeleitet werden kann. Andernfalls, wenn das Produkt noch nicht verfallen ist, wird beispielsweise im Vermittlungsmodul 5 eine Angebotsidentifizierung generiert, welche mindestens Informationen zur Identifizierung des anzubietenden Produkts sowie des betreffenden Anbieters 1 umfasst. In einer Bestätigung kann dem betreffenden Anbieter 1 die Angebotsidentifizierung mitgeteilt werden. Je nach Ausführungsvariante kann dies vom Vermittlungsmodul 5 über den Dienstleister 3, respektive den Angebot-Server 3, oder direkt vom Vermittlungsmodul 5 an den Anbieter 1 geschehen. Die Angebotsidentifizierung kann auch im Angebot-Server 3 generiert werden und anschliessend dem Anbieter 1 bestätigt und dem Vermittlungsmodul 5 übermittelt werden. Letztlich ist es auch möglich, dass die Angebotsidentifizierung direkt vom Anbieter 1, auf Grund von Formatsvorlagen definiert wird und anschliessend vom Angebot-Server 3 oder vom Vermittlungsmodul 5 auf Korrektheit und Eindeutigkeit überprüft wird.

Eine solche Angebotsidentifizierung kann mehrere Felder umfassen. Ein erstes Feld enthält zum Beispiel eine Bezeichnung eines Anbieters 1, beispielsweise ein Mnemonic aus mehreren alphanumerischen Zeichen. Ein zweites Feld, welches zum Beispiel vom ersten durch einen Feldbegrenzer getrennt ist, enthält eine Produkteidentifikation, die ein bestimmtes Gut, eine Dienstleistung oder eine Informationslieferung bezeichnet und ebenfalls mehrere alphanumerische Zeichen umfassen kann. Ein weiteres Feld, beispielsweise wiederum von der Produkteidentifikation durch einen Feldbegrenzer abgetrennt, enthält eine Checksumme, die durch einen dem Fachmann bekannten Fehlerprüfungs- oder Fehlerkorrekturalgorithmus aus den vorhergehenden Feldern bestimmt ist. Anstelle der Feldbegrenzer können auch Felder von konstanter vordefinierter Länge oder Felder mit Längenangaben verwendet werden.

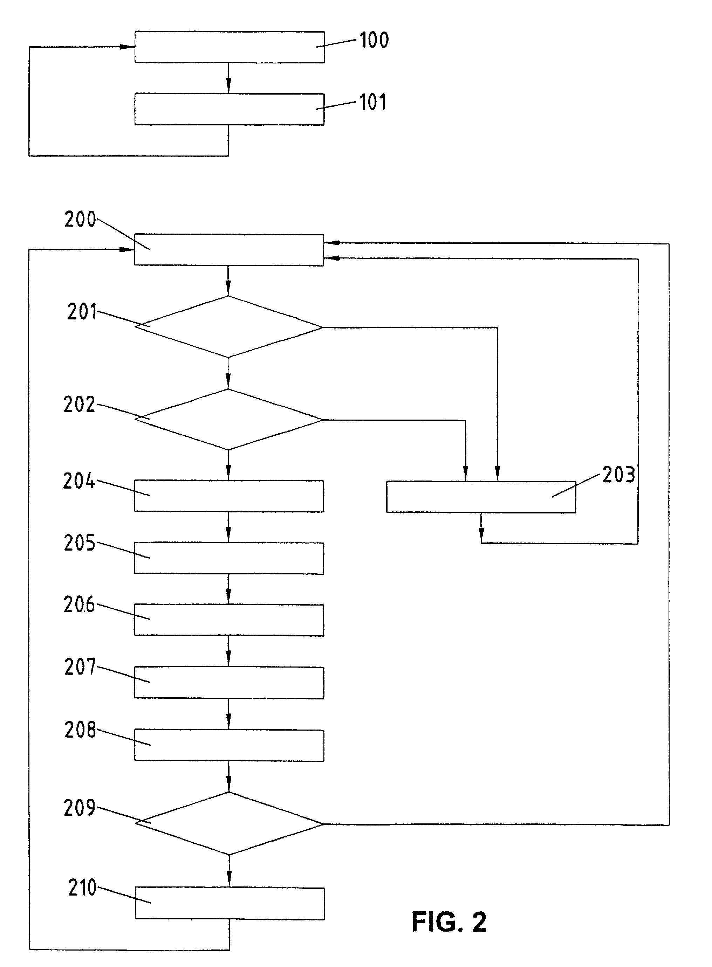

Im durch den mit dem Pfeil 8 angedeuteten Datenfluss werden gewisse Angebotsinformationen vom Vermittlungsmodul 5 an das Verkaufsmodul 9 übermittelt. Die im Datenfluss 8 übermittelten Daten umfassen Informationen zur Identifizierung des Anbieters 1 und des angebotenen Produkts sowie Angaben über die verfügbare Menge des angebotenen Produkts, optional den Preis des Produkts, sowie eventuell das Verfalldatum des Produkts. Das Verkaufsmodul 9 kann von einem Fachmann als programmierter Softwareprozess ausgeführt werden, der auf einem eigenen, separaten oder zusammen mit anderen Softwareanwendungen auf einem gemeinsamen Computer installiert werden kann. Der programmierte Softwareprozess, der in der Figur 2 beispielhaft illustriert ist, nimmt im Schritt 100 die Angebotsinformationen vom Vermittlungsmodul 5 entgegen und speichert sie, falls das eventuelle Verfalldatum des angebotenen Produkts noch nicht abgelaufen ist, im Schritt 101 in einer Datenbank ab, welche vom Fachmann auf dem selben Computer oder auf einem anderen dem Verkaufsmodul 9 zugänglichen Computer installiert wird.

Das mit dem gestrichelten Rechteck 30 umrandete Gebiet der Figur 1 umfasst Teile, insbesondere eine Dienstzentrale 11, aus dem System und Verfahren zur Übermittlung von Aufträgen, welches oben beschrieben wurde, sowie Kommunikationskanäle 61, 62, 63, welche im Namen der Anmelderin in der Patentanmeldung PCT/CH98/00148 (WO 99/55050), betreffend ein Datenverbreitungssystem und Datenverbreitungsverfahren, beschrieben wurden.

Die vom Vermittlungsmodul 5 generierte, respektive von diesem von einem Anbieter 1 entgegengenommene Angebotsidentifizierung kann, typischerweise zusammen mit zusätzlichen Informationen über das anzubietende Produkt, gemäss dem oben erwähnten Datenverbreitungssystem und Datenverbreitungsverfahren über einen oder mehrere von verschiedenen möglichen Kommunikationskanälen, sogenannte Verbreitungskanäle 61, 62, 63, an eine Vielzahl von Teilnehmern 7 verbreitet werden. Dabei werden diese Daten gemäss diesem oben erwähnten Datenverbreitungssystem und Datenverbreitungsverfahren in einer Informationsdatenbank abgelegt, wo sie dazu bestimmt werden können über verschiedene spezifische Verbreitungskanäle 61, 62, 63 an bestimmte Teilnehmer 7 oder Teilnehmergruppen ausgesendet zu werden.

Die Verbreitung der Daten aus der Informationsdatenbank erfolgt automatisch gemäss Sendekriterien, welche die Adresse eines Teilnehmers 7 oder einer Teilnehmergruppe, Angaben über die auszusendenden Daten sowie über einen zu benützenden Verbreitungskanal 61, 62, 63 umfassen. Mögliche Verbreitungsformen und Verbreitungskanäle sind beispielsweise Meldungen in digitalen Mobilfunknetzen, zum Beispiel SMS Kurzmeldungen oder USSD Daten, Meldungen in Personenrufsystemen, adressierte Meldungen, wie zum Beispiel E-Mail, über das Internet, Teletextseiten in einem Teletextkanal, programmbegleitende Daten in einem DAB-Kanal (Digital Audio Broadcasting), Fax-Meldungen in einem öffentlichen Telekommunikationsnetz, Anzeigen der Daten auf einer Anzeigetafel, oder Drucken der Informationen in Katalogen oder anderen Printmedien. Gemäss diesem oben erwähnten Datenverbreitungssystem und Datenverbreitungsverfahren können die Daten neben der beschriebenen Angebotsidentifizierung zur Bestellung von Gütern und/oder Dienstleistungen zum Beispiel auch andere Textinformationen und/oder Multimedia-Daten umfassen. Es ist auch möglich, dass die erwähnten Sendekriterien durch die Teilnehmer 7 über ein Telekommunikationssystem, zum Beispiel über das Internet oder mittels speziellen Meldungen über ein Mobilfunknetz, verwaltet werden können. Auf diese Weise können Teilnehmer 7 beispielsweise Kategorien, Themen, Typen, oder Anbieter von Informationen, insbesondere Güter, Gütergruppen, Dienstleistungen und/oder Dienstleistungsgruppen bestimmen, an denen sie interessiert sind, und sie können Sendezeiten und/oder -periodizitäten bestimmen. Die Aussendung von Daten kann mittels entsprechenden Sendekriterien auch an bestimmte Ereignisse gebunden werden.

Ein Teilnehmer 7 eines Mobilfunknetzes 20, beispielsweise ein GSM- oder UMTS-Netz, der über die erwähnten Kommunikationskanäle 61, 62, 63 Kenntnis über das angebotene Produkt und insbesondere Kenntnis über die entsprechende Angebotsidentifizierung erhält, kann dieses Produkt gemäss dem beschriebenen Verfahren zur Übermittlung von Aufträgen bestellen. Demzufolge wird die vom interessierten Teilnehmer 7 in sein Mobilgerät eingegebene, zum Beispiel ein Mobilfunktelefon oder ein tragbarer persönlicher Computer, beispielsweise ein Laptop oder Palmtop, mit entsprechender Mobilfunk-Funktionalität, oder die von diesem Mobilgerät empfangene Angebotsidentifizierung als Grundlage verwendet um eine entsprechende Kurzmeldung, beispielsweise eine SMS Kurzmeldung oder USSD Daten, über ein Mobilfunknetz, zum Beispiel ein GSM- oder UMTS-Netz, mittels dem durch den Pfeil 10 angedeuteten Datenfluss, an die Dienstzentrale 11 zu übermitteln. Die Übermittlung und Behandlung der Daten in Kurzmeldungen an die und in der Dienstzentrale 11 erfolgt beispielsweise gemäss dem SICAP Verfahren, welches unter anderem in EP 689 368 beschrieben worden ist, oder gemäss einem ähnlichen Verfahren oder basierend auf WAP (Wireless Application Protocol).

Die Dienstzentrale 11 umfasst beispielsweise ein Short Message Service Centre (SMSC) und ein Modul zur Ausführung des oben erwähnten SICAP Verfahrens, der betreffende Teilnehmer 7 kann also auf Grund der Identifizierung der eingegangenen Kurzmeldung erkannt werden und der Inhalt der Kurzmeldung gemäss dem SICAP Verfahren einer betreffenden, durch einen Datenvorsatz der Kurzmeldung bestimmten Anwendung zur Weiterbehandlung übergeben werden. In dieser Anwendung, die sich ebenfalls in der Dienstzentrale 11 befinden kann, werden mindestens gewisse in der Kurzmeldung enthaltene Bestellungsdaten mit Identifikationsdaten des erkannten Teilnehmers 7 aus einer der Dienstzentrale 11 zugänglichen Teilnehmerdatenbank des Mobilfunknetzes 20 verknüpft. Die verknüpften Identifikationsdaten umfassen mindestens die Adresse des interessierten Teilnehmers 7, eventuell auch dessen Sprache und auch weitere Informationen, zum Beispiel eine zusätzliche Verrechnungs- und/oder Zustellungsadresse oder Angaben über die Solvenz des betreffenden Teilnehmers 7.

Im durch den Pfeil 12 angedeuteten Datenfluss werden die verknüpften Bestelldaten, welche folglich mindestens die erwähnten Identifikationsdaten des Teilnehmers 7 sowie Informationen zur Identifizierung des angebotenen, respektive bestellten Produkts, und des betreffenden Anbieters 1 umfassen an das Vermittlungsmodul 5 weitergeleitet.

Das Vermittlungsmodul 5 leitet im durch den Pfeil 13 angedeuteten Datenfluss die von der Dienstzentrale 11 erhaltenen Bestelldaten an das Verkaufsmodul 9 weiter, wo sie vom in Figur 2 illustrierten programmierten Softwareprozess im Schritt 200 entgegengenommen und weiterbehandelt werden, wie dies nun detaillierter beschrieben wird.

In einer Ausführungsvariante wird im Schritt 201 zunächst die Solvenz des Teilnehmers 7 überprüft, der die betreffende entgegengenommene Bestellung aufgegeben hat. Dies kann anhand von Informationen geschehen, die in einer dem Verkaufsmodul 9 zugänglichen Datenbank abgespeichert sind, beispielsweise eine Datenbank, die vom Betreiber des Mobilfunknetzes 20 oder von einem Finanzdienstleister verwaltet wird. Informationen über die Solvenz des Teilnehmers 7 können dem Verkaufsmodul 9 in einer Variante auch von der Dienstzentrale 11, respektive vom Vermittlungsmodul 5 zusammen mit den verknüpften Bestelldaten übermittelt werden. Falls die Solvenz des Teilnehmers 7 nicht gewährleistet werden kann, wird im Schritt 203 des Softwareprogramms eine negative Bestätigung mit der entsprechenden Begründung an den betreffenden Teilnehmer 7 gesandt, zum Beispiel mittels Kurzmeldungen, beispielsweise eine SMS Kurzmeldung oder USSD Daten, über ein Mobilfunknetz 20, zum Beispiel ein GSM- oder UMTS-Netz. Zu diesem Zweck wird das Verkaufsmodul 9 zusammen mit der betreffenden Computer-Hardware vom Fachmann mit den entsprechenden Kommunikationsmitteln versehen. Die begründete negative Bestätigung wird vom Mobilgerät des betreffenden Teilnehmers 7 über das Mobilfunknetz 20 empfangen und auf dem Display dieses Mobilgeräts dargestellt. Andernfalls, wenn die Solvenz des Teilnehmers 7 betreffend der Bestellung gewährleistet ist, fährt das Softwareprogramm des Verkaufsmoduls 9 mit dem Schritt 202 fort.

Im Schritt 202 wird überprüft ob die momentan verfügbare Menge des bestellten Produkts grösser als Null ist. Falls das bestellte Produkt nicht mehr verfügbar ist, das heisst falls die verfügbare Menge Null beträgt, wird im Schritt 203 des Softwareprogramms eine negative Bestätigung mit der entsprechenden Begründung wie oben erwähnt an den betreffenden Teilnehmer 7 gesandt. Andernfalls, wird im Schritt 204 ein Token generiert, der ein eindeutiges Zertifikat darstellt, und welcher beispielsweise auch Informationen enthält um das bestellte Produkt und/oder den betreffenden Anbieter 1 zu identifizieren. Der Token kann beispielsweise durch dem Fachmann bekannte Mittel verschlüsselt und mit einer digitalen Signatur versehen sein um dessen Authentizität und Sicherheit zu gewährleisten. An dieser Stelle sollte erwähnt werden, dass in einer alternativen Ausführung eine der verfügbaren angebotenen Menge von Produkten entsprechende Anzahl von Token bereits bei der Entgegennahme und Abspeicherung des Angebots in den Schritten 100 und 101 generiert und abgespeichert werden kann, wobei sich dem entsprechend der Schritt 204 in dieser Form erübrigt.

In einem nicht explizit dargestellten Schritt wird gegebenenfalls vom Softwareprogramm anhand des Verfalldatums des betreffenden angebotenen Produkts überprüft, ob zum Zeitpunkt der Bestellung das Produkt noch nicht verfallen ist. Falls das Produkt tatsächlich verfallen ist, wird dies ähnlich wie oben beschrieben dem betreffenden Teilnehmer 7 mittels einer negativen Bestätigung mit der entsprechenden Begründung mitgeteilt. Neben dem Verfalldatum kann es natürlich auch andere Gründe geben weshalb ein Angebot nicht mehr gültig ist. Zum Beispiel kann ein Angebot vom Anbieter zurückgezogen werden und/oder es können sich die Lieferbedingungen, beispielsweise der Preis oder die Verfügbarkeit der angebotenen Produkte, verändert haben. Entsprechende Funktionen zur Entgegennahme diesbezüglicher Informationen, beispielsweise vom betreffenden Anbieter 1, und zu deren Überprüfung vor der Generierung und Übermittlung eines Tokens können vom Fachmann implementiert werden.

Im Schritt 205 wird der generierte Token zusammen mit Angaben über den betreffenden Teilnehmer 7, beispielsweise dessen Identität und Adresse, und mit Informationen über das betreffende bestellte Produkt und den entsprechenden Anbieter 1, beispielsweise in der Form der in der Bestellung angegebenen Angebotsidentifizierung, an den Anbieter 1 übermittelt. Je nach Ausführungsvariante und eventuell auch in Abhängigkeit des betreffenden Produkts kann dieser in der Figur 1 durch den Pfeil 15 angedeutete Datenfluss in elektronischer Form über ein Festnetz, beispielsweise mittels EDI oder E-Mail, über ein Mobilnetz oder über konventionelle Mittel mit Papier via die Post oder mittels Fax ausgeführt werden.

Im Schritt 206 wird der generierte Token zusammen mit einer positiven Bestätigung an den betreffenden Teilnehmer 7 übermittelt. Die Übermittlung erfolgt zum Beispiel mittels Kurzmeldungen, beispielsweise eine SMS Kurzmeldung oder USSD Daten, über ein Mobilfunknetz 20, zum Beispiel ein GSM- oder UMTS-Netz. Diese positive Bestätigung wird vom Mobilgerät des betreffenden Teilnehmers 7 empfangen und auf dem Display des Mobilgeräts dargestellt. Der Token wird beispielsweise auf einer entfernbar mit dem Mobilgerät verbundenen Chipkarte gespeichert und kann beispielsweise zu einem späteren Zeitpunkt als Zutritts-Ticket, oder als Link zu einem Satz von Zutritts-Tickets, bei einer Zutrittskontrolle, beispielsweise bei einer Sportveranstaltung, einem Konzert, Theater etc. verwendet werden. Für diesen und andere Zwecke, kann der Token beispielsweise auf der Chipkarte, beispielsweise eine SIM-Karte (Subscriber Identity Module) und/oder eine Chipkarte gemäss dem Opencard-Typ, als Applet, beispielsweise ein Java Applet, abgelegt werden, welches dann als Ticketing-Applet bei einer entsprechenden automatisierten Zutrittskontrolle Anwendung findet, zum Beispiel indem es mittels einer kontaktlosen Schnittstelle an diese Zutrittskontrolle übermittelt wird. Bei solchen Produktetypen wird das Token vom Anbieter 1 entsprechend in seine Zutrittsprozesse integriert, so dass die Zutrittskontrolle korrekt ablaufen kann. Im allgemeinen kann ein auf der Chipkarte gespeicherter Token zu einem späteren Zeitpunkt als Beleg der erfolgreichen Bestellung eines betreffenden Produkts dienen und bei dessen Eintausch gegen den entsprechenden Gegenwert, das heisst die Übergabe einer Ware oder die Ausführung von, respektive den Zutritt zu einer Dienstleistung, beispielsweise wieder gelöscht werden.

Im Schritt 207 wird dem Teilnehmer 7 das bestellte und in Form eines Tokens übermittelte Produkt verrechnet. Dies kann so gelöst werden, dass die Kosten des bestellten Produkts sowie Angaben zur Identifizierung des betreffenden Teilnehmers 7 in eine dem Verkaufsmodul zugängliche Datenbank eingetragen werden, beispielsweise dieselbe Datenbank in der die Angebote abgespeichert werden, oder dass die nötigen Informationen einem Finanzdienstleister übermittelt werden. Falls die verrechneten Kosten vom Verkaufsmodul 9 in einer Datenbank abgelegt werden, können sie im Batch-Modus zu einem späteren Zeitpunkt verarbeitet werden, indem sie beispielsweise periodisch einem Finanzdienstleister zur weiteren Verarbeitung und Belastung an die Teilnehmer 7 übermittelt werden oder indem die Kosten den betreffenden Teilnehmer 7 direkt in ihre Rechnung für die Kommunikationskosten im Mobilfunknetz 20 hinzugefügt werden. In einer weiteren Variante können die Kosten dem betreffenden Teilnehmer 7 direkt auf seiner Chipkarte belastet werden, beispielsweise indem ein entsprechender Betrag von einem auf der Chipkarte gespeicherten vorausbezahlten Geldbetrag abgezogen wird. Entsprechende Instruktionen können über das Mobilfunknetz 20 unter Zuhilfenahme von dem Fachmann bekannten geeigneten Sicherheitsverfahren an die entfernbar mit dem Mobilgerät des Teilnehmers 7 verbundene Chipkarte übermittelt werden.

Im Schritt 208 wird die Mengenangabe über die Anzahl verfügbarer betreffende Produkte im Verkaufsmodul 9 nachgeführt indem sie dekrementiert wird.

Im Schritt 209 wird überprüft ob die Mengenangabe über die aktuelle Anzahl verfügbarer betreffende Produkte Null beträgt, das heisst ob kein Produkt mehr verfügbar ist. Falls noch betreffende Produkte verfügbar sind, wird gegebenenfalls mit dem Entgegennehmen einer neuen Bestellung im Schritt 200 fortgefahren. Falls allerdings kein betreffendes Produkt mehr verfügbar ist, wird im Schritt 210, wie in Figur 1 durch den Datenfluss 16 angedeutet, dem Vermittlungsmodul vom Verkaufsmodul eine Instruktion übermittelt das Angebot des entsprechenden Produkts zu stoppen. Zusätzlich wird dem betreffenden Anbieter 1 beispielsweise eine Bestätigung geschickt, dass das Angebot abgeschlossen wurde. Je nach Ausführung, kann diese Bestätigung auch eine Abrechnung enthalten und/oder den Anbieter 1 informieren wie viele Produkte verkauft wurden. Danach wird gegebenenfalls mit dem Entgegennehmen einer neuen Bestellung im Schritt 200 fortgefahren. Der Schritt 210 kann, beispielsweise von einem separaten Prozess der die gespeicherten Angebote periodisch überprüft, auch dann ausgeführt werden, wenn das Verfalldatum eines angebotenen Produkts abläuft. Wie oben erwähnt können solche Instruktionen zum Stopp des Angebots auch auf Grund anderer Ursachen, zum Beispiel das Zurückziehen eines Angebots durch den Anbieter 1 oder geänderte Lieferbedingungen, wie Verfügbarkeit oder Preis, übermittelt werden. Im Vermittlungsmodul 5 hat der Empfang dieser Instruktion das Angebot eines bestimmten Produkts zu stoppen zur Folge, dass die oben beschriebene Verbreitung der Angebotsidentifizierung des betreffenden Produkts über die verschiedenen Kommunikationskanäle 61, 62, 63 beendet, das heisst abgebrochen wird.

In einer Ausführungsvariante ist es möglich, dass ein interessierter Teilnehmer 7 bei der oben beschriebenen Eingabe und Übermittlung einer Bestellung zusätzlich eine Bestellungsanzahl eingeben kann, welche im angedeuteten Datenfluss 10 zusammen mit den Bestellungsdaten an die Dienstzentrale 11 übermittelt wird. Von der Dienstzentrale 11 wird diese Bestellungsanzahl zusammen mit den oben beschriebenen verknüpften Bestelldaten an das Vermittlungsmodul 5 übertragen und von dort zusammen mit den Bestelldaten an das Verkaufsmodul 9 weitergeleitet, wo sie vom in Figur 2 illustrierten programmierten Softwareprozess im Schritt 200 entgegengenommen wird.

In einer ersten Untervariante der Mehrfachbestellung wird im Softwareprogramm so lange ein weiterer, zusätzlicher Token generiert und die Mengenangabe der verfügbaren Anzahl des betreffenden Produkts um Eins dekrementiert, bis entweder die dekrementierte Mengenangabe Null beträgt, das heisst keine weiteren betreffende Produkte mehr verfügbar sind und die Bestellung nicht vollständig geliefert werden kann, oder bis die Anzahl der generierten Token der Bestellungsanzahl entspricht, das heisst alle bestellten betreffenden Produkte geliefert werden können. In dieser ersten Untervariante wird also für jedes lieferbare Produkt ein Token generiert und an den Teilnehmer 7 übertragen. Falls nicht genügend Produkte vorhanden sind, wird die verfügbare Anzahl Token zusammen mit einer entsprechenden Bestätigung dem Teilnehmer 7 übermittelt. Wie oben erwähnt wurde, können in einer alternativen Ausführung die Tokens schon in den Schritten 100 und 101 generiert und abgespeichert werden.

In einer zweiten Untervariante der Mehrfachbestellung wird, falls die genannte Mengenangabe grösser als Null ist, ein Token generiert, der eine Lieferungszahl enthält, welche beginnend bei Null so lange um Eins inkrementiert und die Mengenangabe der verfügbaren betreffenden Produkte solange um Eins dekrementiert wird, bis die Lieferungszahl der genannten Bestellungsanzahl entspricht, das heisst es sind genügend betreffende Produkte vorhanden, oder bis die dekrementierte Mengenangabe der verfügbaren betreffenden Produkte Null beträgt, das heisst es sind nicht genügend Produkte vorhanden und die Bestellung kann nicht vollständig geliefert werden. In dieser zweiten Untervariante wird also auch für mehrere bestellte Produkte nur ein Token generiert und an den Teilnehmer 7 übertragen, wobei dieser Token allerdings die Anzahl gelieferter Produkte enthält. Falls nicht genügend Produkte vorhanden sind, wird dem Teilnehmer 7 zusätzlich eine entsprechende Bestätigung übermittelt. Wie oben erwähnt wurde, können in einer alternativen Ausführung die Tokens schon in den Schritten 100 und 101 generiert und abgespeichert werden, das heisst dass in dieser zweiten Untervariante der Mehrfachbestellung entsprechend viele solcher vorgenerierter Token "vernichtet" werden, wie in der Lieferungszahl des übermittelten Tokens angegeben sind.

Die beiden beschriebenen Untervarianten der Mehrfachbestellung können vom Fachmann, beispielsweise in Abhängigkeit der betreffenden angebotenen und bestellten Produkte, auch kombiniert eingesetzt werden.

Für die Fälle in denen eine Bestellung nur unvollständig geliefert werden kann, kann es vom Fachmann mit zusätzlichen Schritten, auf die hier nicht näher eingegangen wird, einem Teilnehmer 7 ermöglicht werden die nur teilweise gelieferte Bestellung rückgängig zu machen, und somit die Anzahl der verfügbaren Produkte um die Anzahl retournierter Token wieder zu erhöhen. Einem Teilnehmer kann generell die Möglichkeit geboten werden eine Bestellung rückgängig zu machen, allerdings kann ihm dafür gegebenenfalls eine Gebühr verrechnet werden.

Es sollte hier auch erwähnt werden, dass das beschriebene Verfahren vom Fachmann so ausgeführt werden kann, dass ein interessierter Teilnehmer 7 gleichzeitig mehrere verschiedene Produkte bestellen kann.

Die mit den Pfeilen 8, 12, 13, und 16 angedeuteten Datenflüsse zwischen der Dienstzentrale 11 und dem Vermittlungsmodul 5, respektive zwischen dem Vermittlungsmodul 5 und dem Verkaufsmodul 9, werden je nach Ausführungsvariante und Implementation dieser Server vom Fachmann als Computer-interne Kommunikation ausgeführt, wenn die entsprechenden Softwareprogramme auf dem gleichen Computer installiert sind, oder über lokale Festnetze, beispielsweise über LAN's oder Hochgeschwindigkeitsbusse, ausgeführt, wenn die entsprechenden Software Prozesse auf verschiedenen Computern implementiert werden.

Die Dienste des beschriebenen Verfahrens können den Anbietern in verschiedenen Formen verrechnet werden. Beispielsweise können sie aufgefordert werden eine feste, beispielsweise einmalige, monatliche oder jährliche Grundgebühr und zusätzlich eine Provision, beispielsweise in Proportion zu der Anzahl verkaufter oder angebotenen Objekten oder im Verhältnis zu den Einnahmen durch den Verkauf dieser Objekte, zu zahlen.

Neben den Verdienstmöglichkeiten durch Anbieten der Dienstleistungen aus dem beschriebenen Verfahren ist es auch möglich einen Server und insbesondere die Softwareprogramme für ein Verkaufsmodul 9 zu verkaufen.

Obwohl hier nur wenige Anwendungsbeispiele gegeben wurden, sind andere Anwendungsmöglichkeiten anhand der Ansprüche möglich und basierend auf dem erfindungsgemässen Verfahren können verschiedene elektronische und automatisierte Bazars und Marktplätze implementiert werden. An dieser Stelle muss auch erwähnt werden, dass sich das beschriebene Verfahren nicht nur für dekrementierende Prozesse, in welchen beispielsweise die Mengenangabe oder die Anzahl Token dekrementiert werden, eignet, sondern dass es durchaus auch auf inkrementierende Prozesse angewendet werden kann, in welchen entsprechend der Anwendung beispielsweise eine Mengenangabe oder eine Anzahl Token inkrementiert werden.

Durch Erweitern der angedeuteten Datenflüsse 10 und 14 auf Festnetze, beispielsweise das Internet oder das öffentliche vermittelte Telefonnetz (PSTN) können solche Bazars und Marktplätze auch für Teilnehmer in diesen Festnetzen zugänglich gemacht werden.

## Patentansprüche

1. Bestellverfahren, mit welchem Teilnehmer (7) eines Mobilfunknetzes (20) Güter und/oder Dienstleistungen von einer Vielzahl von Anbietern (1) bestellen können, wobei verschiedene angebotene Güter und/oder Dienstleistungen mit verschiedenen entsprechenden Angebotsidentifizierungen identifiziert werden, wobei jede Angebotsidentifizierung eine Identifizierung des Anbieters (1) umfasst, wobei Teilnehmer (7) ein bestimmtes Gut und/oder eine bestimmte Dienstleistung bestellen, indem sie die entsprechende Angebotsidentifizierung in ihre Mobilgeräte eingeben und entsprechende Bestellungsdaten über das genannte Mobilfunknetz (20) an ein Verkaufsmodul (9) übermitteln, und wobei für mindestens gewisse der angebotenen Güter und Dienstleistungen eine Mengenangabe abgespeichert wird, die der beschränkten verfügbaren Anzahl des betreffenden angebotenen Guts oder der betreffenden angebotenen Dienstleistung entspricht, **dadurch gekennzeichnet,**
**dass** vom genannten Verkaufsmodul (9) Token, die gewissen Gütern und/oder Dienstleistungen entsprechen, in einer begrenzten Anzahl zur Verfügung gestellt werden, die der verfügbaren Anzahl des betreffenden angebotenen Guts oder der betreffenden angebotenen Dienstleistung Dienstleistung entspricht, wobei ein Token jeweils ein eindeutiges Zertifikat mit Informationen zur Identifizierung des bestellten Guts oder der bestellten Dienstleistung und/oder des betreffenden Anbieters darstellt, und wobei ein Token jeweils gegen das betreffende Gut oder die betreffende Dienstleistung eintauschbar ist, und
**dass** bei einer Bestellung ein entsprechender Token über das genannte Mobilfunknetz (20) an das Mobilgerät eines bestellenden Teilnehmers (7) übermittelt und dort gespeichert wird, falls das betreffende Gut oder die betreffende Dienstleistung verfügbar ist, wobei für jede eingegangene Bestellung, für welche ein Token generiert, respektive übermittelt wurde, die entsprechende Mengenangabe über die verfügbare Anzahl dekrementiert wird.

2. Bestellverfahren gemäss vorhergehendem Anspruch, **dadurch gekennzeichnet, dass** der Teilnehmer (7) bei jeder Bestellung erkannt wird.

3. Bestellverfahren gemäss vorhergehendem Anspruch, **dadurch gekennzeichnet, dass** Bestellungsdaten mit Teilnehmeridentifikationsdaten verknüpft werden.

4. Bestellverfahren gemäss vorhergehendem Anspruch, **dadurch gekennzeichnet, dass** die genannten Teilnehmeridentifikationsdaten eine Zustellungsadresse umfassen.

5. Bestellverfahren gemäss einem der vorhergehenden Ansprüche, **dadurch gekennzeichnet, dass** Bestellungsdaten automatisch an den in den Bestellungsdaten angegebenen Anbieter (1) geleitet werden.

6. Bestellverfahren gemäss einem der vorhergehenden Ansprüche, **dadurch gekennzeichnet, dass** Güter und/oder Dienstleistungen über verschiedene Kommunikationskanäle (61, 62, 63) an die Teilnehmer (7) angeboten werden, wobei mindestens gewisse Angebote eine Angebotsidentifizierung enthalten.

7. Bestellverfahren gemäss vorhergehendem Anspruch, **dadurch gekennzeichnet, dass** das Anbieten von einem Gut oder einer Dienstleistung gestoppt wird (210), wenn keine entsprechenden Token mehr zur Verfügung stehen.

8. Bestellverfahren gemäss einem der Ansprüche 6 oder 7, **dadurch gekennzeichnet, dass** das Anbieten von einem Gut oder einer Dienstleistung gestoppt wird (210), wenn ein Verfalldatum dieses Guts oder dieser Dienstleistung abgelaufen ist.

9. Bestellverfahren gemäss einem der vorhergehenden Ansprüche, **dadurch gekennzeichnet, dass** mindestens gewisse der genannten an das Mobilgerät des Teilnehmers (7) übermittelten Token in einer entfernbar mit diesem genannten Mobilgerät verbundenen Chipkarte abgespeichert werden.

10. Bestellverfahren gemäss vorhergehendem Anspruch, **dadurch gekennzeichnet, dass** mindestens gewisse der auf der genannten Chipkarte gespeicherten Token bei einer Zutrittskontrolle als Zutritts-Tickets verwendbar sind.

11. Bestellverfahren gemäss einem der vorhergehenden Ansprüche, **dadurch gekennzeichnet, dass** mindestens gewisse der genannten bestellenden Teilnehmer (7) zusätzlich eine Bestellungsanzahl eingeben, welche zusammen mit den genannten Bestellungsdaten an das genannte Verkaufsmodul (9) übermittelt wird.

12. Bestellverfahren gemäss vorhergehendem Anspruch, **dadurch gekennzeichnet, dass** eine der genannten Bestellungsanzahl entsprechende Anzahl von Token übermittelt wird, wenn sie verfügbar sind.

13. Bestellverfahren gemäss einem der Ansprüche 11 bis 12, **dadurch gekennzeichnet, dass** Token, die eine Lieferungszahl umfassen, übermittelt werden.

14. Bestellverfahren gemäss einem der vorhergehenden Ansprüche, **dadurch gekennzeichnet, dass** ein genannter Anbieter (1) Informationen über anzubietende genannte Güter und/oder Dienstleistungen einem automatisierten Angebot-Server (3) übergibt.

15. Bestellverfahren gemäss einem der vorhergehenden Ansprüche, **dadurch gekennzeichnet, dass** in einem zusätzlichen Schritt (201) die Solvenz eines genannten bestellenden Teilnehmers (7) geprüft wird, bevor ein genannter Token übermittelt wird.

16. Bestellverfahren gemäss einem der vorhergehenden Ansprüche, **dadurch gekennzeichnet, dass** einem genannten bestellenden Teilnehmer (7) über das genannte Mobilfunknetz (20) ein negativer Bescheid übermittelt wird (203), falls ein seiner eingegangenen Bestellung entsprechender Token nicht verfügbar ist.

17. Bestellverfahren gemäss einem der vorhergehenden Ansprüche, **dadurch gekennzeichnet, dass** einem genannten bestellenden Teilnehmer (7) die Kosten eines von ihm bestellten Guts oder einer von ihm bestellten Dienstleistung, für welche ein Token übermittelt wurde, in seiner Rechnung für die Kommunikationskosten im genannten Mobilfunknetz (20) belastet werden.

18. Bestellverfahren gemäss einem der Ansprüche 1 bis 16, **dadurch gekennzeichnet, dass** einem genannten bestellenden Teilnehmer (7) die Kosten eines von ihm bestellten Guts oder einer von ihm bestellten Dienstleistung, für welche ein Token übermittelt wurde, in einer Rechnung von einem Finanzdienstleister belastet werden.

19. Bestellverfahren gemäss einem der vorhergehenden Ansprüche, **dadurch gekennzeichnet, dass** einem genannten bestellenden Teilnehmer (7) die Kosten eines von ihm bestellten Guts oder einer von ihm bestellten Dienstleistung, für welche ein Token übermittelt wurde, auf seiner Chipkarte belastet werden.

20. Verkaufsverfahren zum Verkaufen von Gütern und/oder Dienstleistungen von beschränkter verfügbarer Anzahl, die von mindestens einem Anbieter (1) einer Vielzahl von Teilnehmern (7) mindestens eines Mobilfunknetzes (20) über mindestens einen Kommunikationskanal (61, 62, 63) zum Verkauf angeboten werden, in welchem Verkaufsverfahren Informationen über angebotene genannte Güter und/oder Dienstleistungen entgegengenommen und gespeichert werden (100, 101), welche Informationen mindestens eine Identifizierung der genannten Güter und/oder Dienstleistungen, eine Identifizierung deren genannten Anbieters (1) sowie eine Mengenangabe über die genannte verfügbare Anzahl umfassen, und in welchem Verkaufsverfahren Bestellungen entgegengenommen werden (200), welche mindestens eine Identifizierung der genannten Güter und/oder Dienstleistungen, eine Identifizierung deren genannten Anbieters (1), sowie Identifikationsdaten des interessierten genannten Teilnehmers (7) umfassen, **dadurch gekennzeichnet,**
**dass** von einem Verkaufsmodul (9) Token, die gewissen Gütern und/oder Dienstleistungen entsprechen, in einer begrenzten Anzahl zur Verfügung gestellt werden, die der verfügbaren Anzahl des betreffenden angebotenen Guts oder der betreffenden angebotenen Dienstleistung entspricht, wobei ein Token jeweils ein eindeutiges Zertifikat mit Informationen zur Identifizierung des bestellten Guts oder der bestellten Dienstleistung und/oder des betreffenden Anbieters darstellt, und wobei ein Token jeweils gegen das betreffende Gut oder die betreffende Dienstleistung eintauschbar ist, und
**dass** bei einer Bestellung ein entsprechender Token über das genannte Mobilfunknetz (20) an das Mobilgerät eines bestellenden Teilnehmers (7) übermittelt und dort gespeichert wird, falls das betreffende Gut oder die betreffende Dienstleistung verfügbar ist, wobei für jede eingegangene Bestellung, für welche ein Token generiert, respektive übermittelt wurde, die entsprechende Mengenangabe über die verfügbare Anzahl dekrementiert wird.

21. Verkaufsverfahren gemäss vorhergehendem Anspruch, **dadurch gekennzeichnet, dass** Instruktionen zum Stoppen des Anbietens eines betreffenden Guts oder einer betreffenden Dienstleistung ausgegeben werden (210), wenn die betreffende genannte Mengenangabe Null beträgt (209).

22. Verkaufsverfahren gemäss einem der Ansprüche 20 bis 21, **dadurch gekennzeichnet, dass** Instruktionen zum Stoppen des Anbietens eines betreffenden Guts oder einer betreffenden Dienstleistung ausgegeben werden (210), wenn ein Verfalldatum dieses betreffenden Guts oder dieser betreffenden Dienstleistung abgelaufen ist.

23. Verkaufsverfahren gemäss einem der Ansprüche 20 bis 22, **dadurch gekennzeichnet, dass** eine entgegengenommene genannte Bestellung zusätzlich eine Bestellungsanzahl umfasst.

24. Verkaufsverfahren gemäss vorhergehendem Anspruch, **dadurch gekennzeichnet, dass** Token übermittelt werden, deren Anzahl der Bestellungsanzahl entspricht falls genügend betreffende Güter oder Dienstleistungen verfügbar sind.

25. Verkaufsverfahren gemäss einem der Ansprüche 23 bis 24, **dadurch gekennzeichnet, dass** ein Token übermittelt wird, der eine Lieferungszahl umfasst.

26. Verkaufsverfahren gemäss einem der Ansprüche 20 bis 25, **dadurch gekennzeichnet, dass** in einem zusätzlichen Schritt (201) die Solvenz eines genannten interessierten Teilnehmers (7) geprüft wird, bevor ihm ein seiner entgegengenommenen Bestellung entsprechender Token übermittelt wird (204).

27. Verkaufsverfahren gemäss einem der Ansprüche 20 bis 26, **dadurch gekennzeichnet, dass** einem genannten interessierten Teilnehmer (7) über das genannte Mobilfunknetz (20) ein negativer Bescheid übermittelt wird (203), falls ein seiner entgegengenommenen Bestellung entsprechender Token nicht übermittelt werden kann.

28. Verkaufsverfahren gemäss einem der Ansprüche 20 bis 27, **dadurch gekennzeichnet, dass** einem genannten interessierten Teilnehmer (7) die Kosten eines von ihm bestellten Guts oder einer von ihm bestellten Dienstleistung, für welche ihm ein entsprechender Token übermittelt wurde, in seiner Rechnung für die Kommunikationskosten im genannten Mobilfunknetz (20) belastet werden.

29. Verkaufsverfahren gemäss einem der Ansprüche 20 bis 27, **dadurch gekennzeichnet, dass** einem genannten interessierten Teilnehmer (7) die Kosten eines von ihm bestellten Guts oder einer von ihm bestellten Dienstleistung, für welche ihm ein entsprechender Token übermittelt wurde, in einer Rechnung von einem Finanzdienstleister belastet werden.

30. Verkaufsverfahren gemäss einem der Ansprüche 20 bis 29, **dadurch gekennzeichnet, dass** einem genannten interessierten Teilnehmer (7) die Kosten eines von ihm bestellten Guts oder einer von ihm bestellten Dienstleistung, für welche ihm ein entsprechender Token übermittelt wurde, auf seiner Chipkarte belastet werden.

31. Verkaufsverfahren gemäss einem der Ansprüche 20 bis 30, **dadurch gekennzeichnet, dass** die genannten Identifikationsdaten des interessierten Teilnehmers (7) eine Zustellungsadresse umfassen.

## Claims

1. Order method with which participants (7) in a mobile radio network (20) are able to order goods and/or services from a multiplicity of vendors (1), various goods and/or services offered for sale being identified with different corresponding offer identifications, each offer identification comprising an identification of the vendor (1), participants (7) ordering a particular item and/or a particular service by entering the corresponding offer identification into their mobile device and transmitting corresponding order data via said mobile radio network (20) to a sales module (9), and a quantity indication being stored for at least certain of the goods and services offered for sale, which quantity indication corresponds to the limited available number of the respective item or of the respective service offered for sale, **characterised**
**in that** tokens, which correspond to certain goods and/or services, are made available in a limited number by the said sales module (9), which number corresponds to the available number of the respective item or of the respective service offered for sale, a token representing in each case an unambiguous certificate with information on identification of the ordered item or the ordered service and/or of the respective vendor, and a token being exchangeable in each case for the respective item or the respective service, and
**in that**, during an order, if the respective item or the respective service is available, a corresponding token is transmitted via said mobile radio network (20) to the mobile device of an ordering participant (7) and is stored there, the corresponding quantity indication about the available number being decreased by increments for each received order for which a token was generated or respectively transmitted.

2. Order method according to the preceding claim, **characterised in that** the participant (7) is recognized with each order.

3. Order method according to the preceding claim, **characterised in that** order data are linked to participant identification data.

4. Order method according to the preceding claim, **characterised in that** the said participant identification data comprise a delivery address.

5. Order method according to one of the preceding claims, **characterised in that** order data are automatically routed to the vendor (1) indicated in the order data.

6. Order method according to one of the preceding claims, **characterised in that** goods and/or services are offered for sale to the participants (7) via various communications channels (61, 62, 63), at least certain offers containing an offer identification.

7. Order method according to the preceding claim, **characterised in that** the offering for sale of an item or a service is stopped (210) when no corresponding tokens are available anymore.

8. Order method according to one of the claims 6 or 7, **characterised in that** the offering for sale of an item or a service is stopped (210) when the expiration date for this item or service has passed.

9. Order method according to one of the preceding claims, **characterised in that** at least certain of the said tokens transmitted to the mobile device of the participant (7) are stored on a chipcard removably connected to this said mobile device.

10. Order method according to the preceding claim, **characterised in that** at least certain of the tokens stored on the said chipcard are usable as admission tickets at an admission control point.

11. Order method according to one of the preceding claims, **characterised in that** at least certain of the said ordering participants (7) additionally enter an order quantity which is transmitted to the said sales module (9) together with the said order data.

12. Order method according to the preceding claim, **characterised in that**, if available, a number of tokens are transmitted corresponding to the said order quantity.

13. Order method according to one of the claims 11 to 12, **characterised in that** tokens are transmitted comprising a supply number.

14. Order method according to one of the preceding claims, **characterised in that** a said vendor (1) passes on to an automated offer server (3) information about said goods and/or services to be offered for sale.

15. Order method according to one of the preceding claims, **characterised in that**, in an additional step (201), the solvency of a said ordering participant (7) is checked before a said token is transmitted.

16. Order method according to one of the preceding claims, **characterised in that** a negative decision is transmitted to a said ordering participant (7) via the said mobile radio network (20) when a token corresponding to his received order is not available.

17. Order method according to one of the preceding claims, **characterised in that** the costs of an item or service ordered by a said ordering participant (7), for which a token was transmitted, are charged to him in his bill for the communications costs in the said mobile radio network (20).

18. Order method according to one of the claims 1 to 16, **characterised in that** the costs of an item ordered by a said ordering participant (7) or of a service ordered by him, for which a token was transmitted, are charged to him in a bill from a financial services provider.

19. Order method according to one of the preceding claims, **characterised in that** the costs of an item ordered by a said ordering participant (7) or of a service ordered by him, for which a token was transmitted, are charged to him on his chipcard.

20. Sales method for selling goods and/or services of limited available quantity which are offered for sale by at least one vendor (1) to a multiplicity of participants (7) in at least one mobile radio network (20) via at least one communications channel (61, 62, 63), in which sales method information about the said goods and/or services offered for sale is received and stored (100, 101), which information comprises at least an identification of the said goods and/or services, an identification of their said vendor (1) as well as a quantity indication about the said available number, and in which sales method orders are accepted (200) which contain at least an identification of the said goods and/or services, an identification of their vendor (1) as well as identification data on the interested said participant (7), **characterised**
**in that** tokens, which correspond to certain goods and/or services, are made available by a sales module (9) in a limited number, which number corresponds to the available number of the respective item or of the respective service offered for sale, a token representing in each case an unambiguous certificate with information on identification of the ordered item or the ordered service and/or the respective vendor, and a token being in each case exchangeable for the respective item or the respective service, and
**in that**, during an order, if the respective item or the respective service is available, a corresponding token is transmitted via the said mobile radio network (20) to the mobile device of an ordering participant (7) and is stored there, the corresponding quantity indication about the available number being decreased by increments for each received order for which a token was generated or respectively transmitted.

21. Sales method according to the preceding claim, **characterised in that** instructions to stop the offering for sale of a respective item or a respective service are issued (210) are when the respective said quantity indication equals zero (209).

22. Sales method according to one of the claims 20 to 21, **characterised in that** instructions to stop the offering for sale of a respective item or a respective service are issued (210) when an expiration date for this respective item or this respective service has passed.

23. Sales method according to one of the claims 20 to 22, **characterised in that** a received said order further comprises an order quantity.

24. Sales method according to the preceding claim, **characterised in that** tokens are transmitted, the number of which corresponds to the order quantity when enough respective goods or services are available.

25. Sales method according to one of the claims 23 to 24, **characterised in that** a token is transmitted which comprises a delivery number.

26. Sales method according to one of the claims 20 to 25, **characterised in that**, in an additional step (201), the solvency of a said interested participant (7) is checked before a token corresponding to his received order is transmitted to him (204).

27. Sales method according to one of the claims 20 to 26, **characterised in that** a negative decision is transmitted (203) to a said interested participant (7) via the said mobile radio network (20) when a token corresponding to his received order cannot be transmitted.

28. Sales method according to one of the claims 20 to 27, **characterised in that** the costs of an item ordered by a said ordering participant (7) or of a service ordered by him, for which a token was transmitted, are charged to him in his bill for the communications costs in the said mobile radio network (20).

29. Sales method according to one of the claims 20 to 27, **characterised in that** the costs of an item ordered by a said ordering participant (7) or of a service ordered by him, for which a token was transmitted, are charged to him in a bill from a financial services provider.

30. Sales method according to one of the claims 20 to 29, **characterised in that** the costs of an item ordered by a said ordering participant (7) or of a service ordered by him, for which a token was transmitted, are charged to him on his chipcard.

31. Sales method according to one of the claims 20 to 30, **characterised in that** the said identification data for the interested participant (7) comprise a delivery address.

## Revendications

1. Procédé de passation de commandes permettant à des abonnés (7) d'un réseau de téléphonie mobile (20) de commander à un grand nombre de fournisseurs potentiels (1) des produits ou des services, ou les deux, divers produits ou services, ou les deux, étant identifiés par diverses identifications appropriées des offres, chaque identification d'offre comprenant une identification du fournisseur potentiel (1), les abonnés (7) commandant un produit déterminé ou un service déterminé, ou les deux, en introduisant l'identification appropriée de l'offre dans leurs appareils mobiles et en communiquant des données de commande correspondantes, par l'intermédiaire du réseau de téléphonie mobile (20), à un module de vente (9), et, au moins pour certains des produits et services, une indication de quantité étant mise en mémoire, qui correspond au nombre disponible limité du produit ou du service offert, **caractérisé en ce**
**que** le module de vente (9) fournit un nombre limité de bons correspondant à certains produits ou services, ou les deux, nombre qui correspond au nombre disponible du produit ou service offert dont il s'agit, un bon constituant dans chaque cas un titre sans ambiguïté, comportant des informations servant à l'identification du produit ou du service commandé ou du fournisseur considéré, ou les deux, et chaque bon pouvant être échangé contre le produit ou le service en question, et
**que**, lors d'une commande, un bon correspondant est transmis, par le réseau de téléphonie mobile (20), à l'appareil mobile d'un abonné (7) qui passe une commande et y est enregistré dans le cas où le produit ou le service considéré est disponible, l'indication de quantité correspondante sur le nombre disponible étant réduit en conséquence pour chaque commande reçue pour laquelle un bon a été pioduit ou transmis.

2. Procédé selon la revendication précédente, **caractérisé en ce que** l'abonné (7) est reconnu à chaque commande.

3. Procédé de passation de commandes selon la revendication précédente, **caractérisé en ce que** des données de commande sont associées à des données d'identification de l'abonné.

4. Procédé de passation de commandes selon la revendication précédente, **caractérisé en ce que** les données d'identification de l'abonné mentionnées comprennent une adresse de livraison.

5. Procédé de passation de commandes selon l'une des revendications précédentes, **caractérisé en ce que** des données de la commande sont communiquées automatiquement au fournisseur (1) indiqué dans les données de commande.

6. Procédé de passation de commandes selon l'une des revendications précédentes, **caractérisé en ce que** des produits ou des services, ou les deux, sont proposés aux abonnés (7) en passant par divers canaux de communication (61, 62, 63), au moins certaines offres comportant une identification d'offre.

7. Procédé de passation de commandes selon la revendication précédente, **caractérisé en ce que** l'offre d'un produit ou d'un service est stoppée (210) s'il n'y a plus de bons appropriés qui soient disponibles.

8. Procédé de passation de commandes selon la revendication 6 ou 7, **caractérisé en ce que** l'offre d'un produit ou d'un service est stoppée (210) si une date limite d'utilisation de ce produit ou service est dépassée.

9. Procédé de passation de commandes selon l'une des revendications précédentes, **caractérisé en ce qu'**au moins certains des bons transmis à l'appareil mobile de l'abonné (7) sont mis en mémoire sur une carte à puce reliée de manière amovible à cet appareil mobile.

10. Procédé de passation de commandes selon la revendication précédente, **caractérisé en ce qu'**au moins certains des bons mis en mémoire sur la carte à puce mentionnée peuvent être utilisés comme tickets d'entrée lors d'un contrôle d'entrée.

11. Procédé de passation de commandes selon l'une des revendications précédentes, **caractérisé en ce qu'**au moins certains des abonnés (7) mentionnés qui passent des commandes tapent en plus un nombre de commandes qui est transmis au module de vente (9) en même temps que les données de commande mentionnées.

12. Procédé de passation de commandes selon la revendication précédente, **caractérisé en ce qu'**un nombre de bons correspondant au nombre de commandes mentionné est transmis si ces bons sont disponibles.

13. Procédé de passation de commandes selon la revendication 11 ou 12, **caractérisé en ce que** sont transmis des bons qui comprennent un nombre de livraisons.

14. Procédé de passation de commandes selon l'une des revendications précédentes, **caractérisé en ce qu'**un fournisseur (1) indiqué transmet à un serveur d'offres automatisé (3) des informations sur des produits ou des services, ou les deux, mentionnés à offrir.

15. Procédé de passation de commandes selon l'une des revendications précédentes, **caractérisé en ce que**, dans une opération supplémentaire (201), la solvabilité d'un abonné (7) mentionné qui passe une commande est vérifiée avant la transmission d'un bon tel qu'il a été mentionné.

16. Procédé de passation de commandes selon l'une des revendications précédentes, **caractérisé en ce qu'**une réponse négative est communiquée, par l'intermédiaire du réseau de téléphonie mobile mentionné (20), à un abonné (7) mentionné qui a passé une commande, si aucun bon correspondant à sa commande, qui a été reçue.

17. Procédé de passation de commandes selon l'une des revendications précédentes, **caractérisé en ce que** le prix d'un produit ou d'un service qu'il a commandé, et pour lequel un bon a été transmis, lui est imputé dans sa facture correspondant aux frais de communications dans le réseau de téléphonie mobile mentionné (20).

18. Procédé de passation de commandes selon l'une des revendications 1 à 16, **caractérisé en ce que** le prix d'un produit ou d'un service qu'il a commandé, et pour lequel un bon a été transmis, lui est imputé dans une facture établie par un prestataire de services financiers.

19. Procédé de passation de commandes selon l'une des revendications précédentes, **caractérisé en ce que** le prix d'un produit ou d'un service qu'il a commandé, et pour lequel un bon a été transmis, lui est imputé sur sa carte à puce .

20. Procédé de vente pour produits ou services, ou les deux, disponibles en quantité limitée, qui sont offerts à un grand nombre d'abonnés (7) d'au moins un réseau de téléphonie mobile (20) par l'intermédiaire d'au moins un canal de communication (61, 62, 63), procédé de vente dans lequel des informations sur les produits ou les services, ou les deux, qui sont offerts, sont reçues et mises en mémoire (100, 101), informations qui comprennent au moins une identification des produits ou services mentionnés, ou des deux, une identification de leur fournisseur potentiel (1) mentionné ainsi qu'une indication quantitative sur le nombre disponible mentionné, et procédé de vente dans lequel des commandes sont reçues (200), commandes qui contiennent au moins une identification des produits ou services mentionnés, ou des deux, une identification de leur fournisseur potentiel (1) mentionné ainsi que des données d'identification de l'abonné (7) mentionné intéressé, **caractérisé en ce**
**qu'**un module de vente (9) fournit en nombre limité des bons qui correspondent à certains produits ou services, ou aux deux, ce nombre correspondant au nombre disponible de produits ou de services en question, un bon constituant un titre sans ambiguïté, qui contient des informations pour l'identification du produit ou du service commandé ou du fournisseur potentiel correspondant, ou des deux, un bon pouvant être échangé contre le produit ou le service considéré, et
**que**, lors d'une commande, un bon correspondant est transmis, par l'intermédiaire du réseau de téléphonie mobile (20) mentionné, à l'appareil mobile d'un abonné (7) qui a passé une commande, où il est mis en mémoire si le produit ou le service en question est disponible, l'indication quantitative correspondante étant déduite de la quantité disponible, pour chaque commande reçue pour laquelle un bon a été créé ou transmis.

21. Procédé de vente selon la revendication précédente, **caractérisé en ce que** des instructions d'arrêt de l'offre d'un produit ou d'un service considéré sont délivrées (210) quand l'indication mentionnée de quantité correspondante est de zéro (209).

22. Procédé de vente selon la revendication 20 ou 21, **caractérisé en ce que** des instructions d'arrêt de l'offre d'un produit ou d'un service considéré sont délivrées (210) quand une date limite concernant ce produit ou ce service est dépassée.

23. Procédé de vente selon l'une des revendications 20 à 22, **caractérisé en ce qu'**une commande mentionnée reçue comprend en outre un nombre de commandes.

24. Procédé de vente selon la revendication précédente, **caractérisé en ce que** des bons sont transmis, leur nombre correspondant au nombre de commandes si des produits ou des services appropriés sont disponibles en quantité suffisante.

25. Procédé de vente selon la revendication 23 ou 24, **caractérisé en ce qu'**il est transmis un bon qui comprend un nombre de livraison.

26. Procédé de vente selon l'une des revendications 20 à 25, **caractérisé en ce que**, dans une opération supplémentaire (201), la solvabilité d'un abonné (7) intéressé mentionné est vérifiée avant que ne lui soit envoyé (204) un bon correspondant à sa commande, qui a été reçue.

27. Procédé de vente selon l'une des revendications 20 à 26, **caractérisé en ce qu'**une réponse négative est communiquée (203) à un abonné (7) intéressé mentionné, par l'intermédiaire du réseau de téléphonie mobile (20), s'il n'est pas possible de lui faire parvenir un bon correspondant à sa commande, qui a été reçue.

28. Procédé de vente selon l'une des revendications 20 à 27, **caractérisé en ce que** le prix d'un produit ou d'un service qu'il a commandé et pour lequel un bon correspondant lui a été envoyé est imputé à un abonné (7) intéressé mentionné sur sa facture relative aux frais de communications dans le réseau mentionné de téléphonie mobile (20).

29. Procédé de vente selon l'une des revendications 20 à 27, **caractérisé en ce que** le prix d'un produit ou d'un service qu'il a commandé et pour lequel un bon correspondant lui a été envoyé est imputé à un abonné (7) intéressé mentionné sur sa facture par un prestataire de services financiers.

30. Procédé de vente selon l'une des revendications 20 à 27, **caractérisé en ce que** le prix d'un produit ou d'un service qu'il a commandé et pour lequel un bon correspondant lui a été envoyé est imputé à un abonné (7) intéressé mentionné sur sa carte à puce.

31. Procédé de vente selon l'une des revendications 20 à 30, **caractérisé en ce que** les données d'identification de l'abonné (7) intéressé comprennent une adresse de livraison.
